(19) Europäisches Patentamt
European Patent Office
Office européen des brevets

(11) **EP 4 518 459 A1**

(12) **EUROPEAN PATENT APPLICATION**
published in accordance with Art. 153(4) EPC

(43) Date of publication:
**05.03.2025 Bulletin 2025/10**

(21) Application number: **23796644.5**

(22) Date of filing: **04.04.2023**

(51) International Patent Classification (IPC):
*H04W 56/00* (2009.01)   *H04W 84/06* (2009.01)
*H04B 7/185* (2006.01)   *H04W 74/00* (2009.01)
*H04L 5/00* (2006.01)   *H04L 1/08* (2006.01)

(52) Cooperative Patent Classification (CPC):
**H04B 7/185; H04L 1/08; H04L 5/00; H04W 56/00;
H04W 74/00; H04W 84/06**

(86) International application number:
**PCT/KR2023/004507**

(87) International publication number:
**WO 2023/210995 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.04.2022 KR 20220052399**

(71) Applicant: **LG Electronics Inc.**
**Yeongdeungpo-gu**
**Seoul 07336 (KR)**

(72) Inventors:
• **SHIN, Seokmin**
**Seoul 06772 (KR)**
• **PARK, Haewook**
**Seoul 06772 (KR)**
• **KO, Hyunsoo**
**Seoul 06772 (KR)**
• **YOU, Hyangsun**
**Seoul 06772 (KR)**
• **SHIM, Jaenam**
**Seoul 06772 (KR)**

(74) Representative: **Plasseraud IP**
**104 Rue de Richelieu**
**CS92104**
**75080 Paris Cedex 02 (FR)**

(54) **METHOD AND DEVICE FOR UPLINK TRANSMISSION AND RECEPTION IN WIRELESS COMMUNICATION SYSTEM**

(57)   A method and device for uplink transmission and reception in a wireless communication system are disclosed. A method performed by a UE in a wireless communication system, according to one embodiment of the present disclosure, may comprise the steps of: receiving, from a base station, first configuration information related to a non-terrestrial network (NTN) and second configuration information related to at least one timing advance (TA) update period; updating, on the basis of the first configuration information, at least one of a common TA and a UE-specific TA at a time point corresponding to the at least one TA update period; and performing, on the basis of the at least one of the common TA and the UE-specific TA which has been updated, a first repeated uplink transmission scheduled to be transmitted after updating the at least one of the common TA and the UE-specific TA.

FIG.11

RECEIVING FIRST CONFIGURATION INFORMATION RELATED TO A NTN AND SECOND CONFIGURATION INFORMATION RELATED TO AT LEAST ONE TA UPDATE PERIOD FROM THE BASE STATION — S1110

UPDATING AT LEAST ONE OF THE COMMON TA OR THE UE-SPECIFIC TA AT A TIME CORRESPONDING TO AT LEAST ONE TA UPDATE PERIOD BASED ON THE FIRST CONFIGURATION INFORMATION — S1120

PERFORMING A FIRST UPLINK REPETITIVE TRANSMISSION SCHEDULED TO BE TRANSMITTED AFTER THE TIME POINT AT WHICH AT LEAST ONE OF THE COMMON TA OR THE UE-SPECIFIC TA IS UPDATED, BASED ON AT LEAST ONE OF THE UPDATED COMMON TA OR THE UE-SPECIFIC TA — S1130

**Description**

[Technical Field]

The present disclosure relates to a wireless communication system, and more specifically to a method and device for performing uplink transmission and reception in a wireless communication system.

[Background]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

The technical problem of the present disclosure is to provide a method and device for performing uplink transmission and reception in a wireless communication system.

In addition, an additional technical problem of the present disclosure is to provide a method and device for fixing a terminal-specific TA and/or a common TA for a PUSCH DM-RS bundling operation.

In addition, an additional technical problem of the present disclosure is to provide a method and device for updating a UE-specific TA and/or a common TA at a time corresponding to a specific TA update period, based on a specific TA update period being configured/indicated.

In addition, an additional technical problem of the present disclosure is to provide a method and device for defining an update of a common TA and/or a terminal-specific TA as a new event at a boundary of a validity duration or within a validity duration.

The technical objects to be achieved by the present disclosure are not limited to the above-described technical objects, and other technical objects which are not described herein will be clearly understood by those skilled in the pertinent art from the following description.

[Technical Solution]

According to one embodiment of the present disclosure, a method performed by a user equipment (UE) in a wireless communication system may include receiving first configuration information related to a non-terrestrial network (NTN) and second configuration information related to at least one timing advance (TA) update period from a base station; updating at least one of a common TA or a UE-specific TA at a time corresponding to the at least one TA update period based on the first configuration information; and performing a first uplink repeat transmission scheduled to be transmitted after a time of updating at least one of the common TA or the UE-specific TA based on the updated at least one of the common TA or the UE-specific TA.

According to another embodiment of the present disclosure, a method performed by a base station in a wireless communication system may include transmitting first configuration information related to a non-terrestrial network (NTN) and second configuration information related to at least one timing advance (TA) update period to a user equipment (UE); transmitting information for scheduling uplink repeat transmission to the UE; and receiving a first uplink repeat transmission based on at least one of a common TA or a UE-specific TA updated at a time corresponding to the at least one TA update period through the first configuration information from the UE, and the first uplink repeat transmission may be scheduled to be transmitted after at least one of the common TA or UE-specific TA is updated.

[Technical Effects]

According to an embodiment of the present disclosure, a method and device for performing uplink transmission and reception in a wireless communication system may be provided.

In addition, according to various embodiments of the present disclosure, a method and device for fixing a UE-specific TA and/or a common TA for a PUSCH DM-RS bundling operation may be provided.

In addition, according to various embodiments of the present disclosure, a method and device for updating a UE-specific TA and/or a common TA at a time corresponding to a specific TA update period, based on a specific TA update period being set/indicated, may be provided.

In addition, according to various embodiments of the present disclosure, a method and device for defining an update of a common TA and/or a UE-specific TA as a new event at a boundary of a validity duration or within a validity duration can be provided.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 illustrates an example of a wireless communication system supporting an unlicensed band applicable to the present disclosure.

FIG. 8 and FIG. 9 are diagrams for explaining NTN supported by a wireless communication system to which the present disclosure may be applied.

FIG. 10 is a diagram for explaining one format of satellite orbit information according to an embodiment of the present disclosure.

FIG. 11 is a diagram for explaining an uplink transmission operation of a UE in a wireless communication system to which the present disclosure may be applied.

FIG. 12 is a diagram for explaining an uplink reception operation of a base station in a wireless communication system to which the present disclosure may be applied.

FIG. 13 is a diagram for explaining a signaling procedure of a network side and a UE according to an embodiment of the present disclosure.

FIG. 14 illustrates a block diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212 (multiplexing and channel coding), TS 36.213(physical layer procedures), TS 36.300(overall description), TS 36.331(radio resource control) may be referred to.

For 3GPP NR, TS 38.211(physical channels and modulation), TS 38.212 (multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management

- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

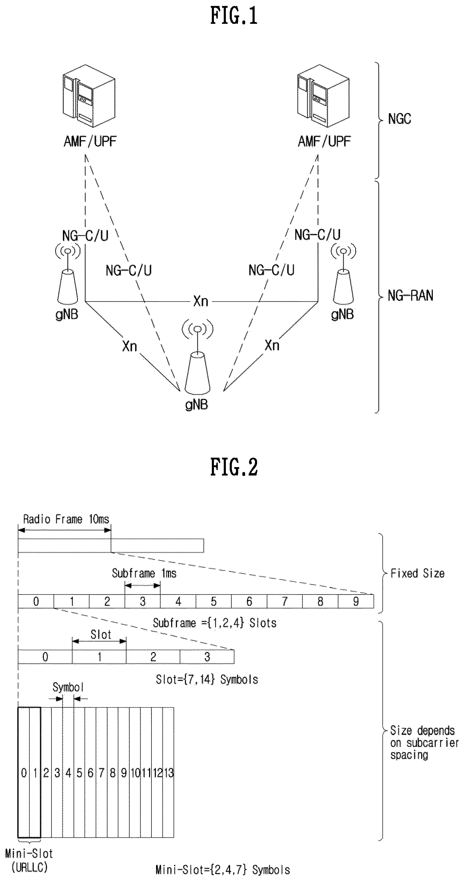

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^\mu \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} N_f/100) \cdot T_c = 10$ms. Here, a radio frame is configured with 10 subframes having a duration of $T_{sf} = (\Delta f_{max} N_f/1000) \cdot T_c = 1$ms, respectively. In this case, there may be one set of frames for an uplink and one set of frames for a downlink. In addition, transmission in an uplink frame No. i from a terminal should start earlier by $T_{TA} = (N_{TA} + N_{TA,offset})T_c$ than a corresponding downlink frame in a corresponding terminal starts. For a subcarrier spacing configuration $\mu$, slots are numbered in an increasing order of $n_s^\mu \in \{0,...,N_{slot}^{subframe,\mu}-1\}$ in a subframe and are numbered in an increasing order of $n_{s,f}^\mu \in \{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^\mu$ in a subframe is temporally arranged with a start of an OFDM symbol $n_s^\mu N_{symb}^{slot}$ in the same subframe. All terminals may not perform transmission and reception at the same time, which means that all OFDM symbols of a downlink slot or an uplink slot may not be used. Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame, \mu}$ | $N_{slot}^{subframe, \mu}$ |
|---|---|---|---|
| 0 | 14 | 10 | 1 |
| 1 | 14 | 20 | 2 |
| 2 | 14 | 40 | 4 |

(continued)

| μ | $N_{symb}^{slot}$ | $N_{slot}^{frame, \mu}$ | $N_{slot}^{subframe, \mu}$ |
|---|---|---|---|
| 3 | 14 | 80 | 8 |
| 4 | 14 | 160 | 16 |

[Table 4]

| μ | $N_{symb}^{slot}$ | $N_{slot}^{frame, \mu}$ | $N_{slot}^{subframe, \mu}$ |
|---|---|---|---|
| 2 | 12 | 40 | 4 |

FIG. 2 is an example on μ=2 (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

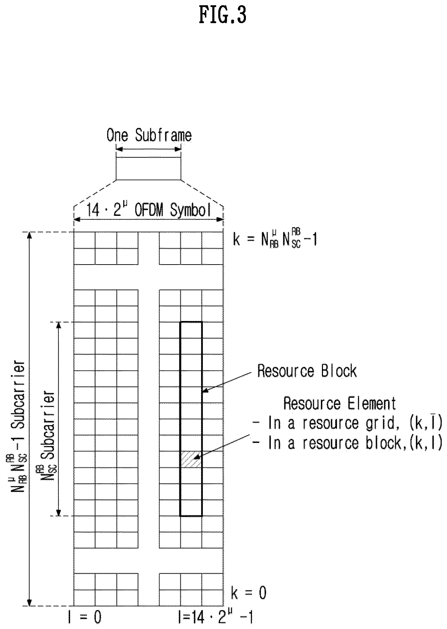

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu}N_{RB}^{max,\mu}$. The $N_{RB}^{max,\mu}$ represents a maximum transmission bandwidth, which may be different between an uplink and a downlink as well as between numerologies. In this case, one resource grid may be configured per μ and antenna port p. Each element of a resource grid for μ and an antenna port p is referred to as a resource element and is uniquely identified by an index pair (k,l'). Here, $k=0,...,N_{RB}^{\mu}N_{sc}^{RB}-1$ is an index in a frequency domain and $l'=0, ...,2^{\mu}N_{symb}^{(\mu)}-1$ refers to a position of a symbol in a subframe. When referring to a resource element in a slot, an index pair (k,l) is used. Here, $l=0,...,N_{symb}^{\mu}-1$. A resource element (k,l') for μ and an antenna port p corresponds to a complex value, $a_{k,l'}^{(p,\mu)}$. When there is no risk of confusion or when a specific antenna port or numerology is not specified, indexes p and μ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radiofrequency channel number).

Common resource blocks are numbered from 0 to the top in a frequency domain for a subcarrier spacing configuration μ. The center of subcarrier 0 of common resource block 0 for a subcarrier spacing configuration μ is identical to 'point A'. A relationship between a common resource block number $n_{CRB}^{\mu}$ and a resource element (k,l) for a subcarrier spacing configuration μ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu}=n_{PRB}^{\mu}+N_{BWP,i}^{start,\mu}$$

$N_{BWP,i}^{start,\mu}$ is a common resource block that a BWP starts relatively to common resource block 0.

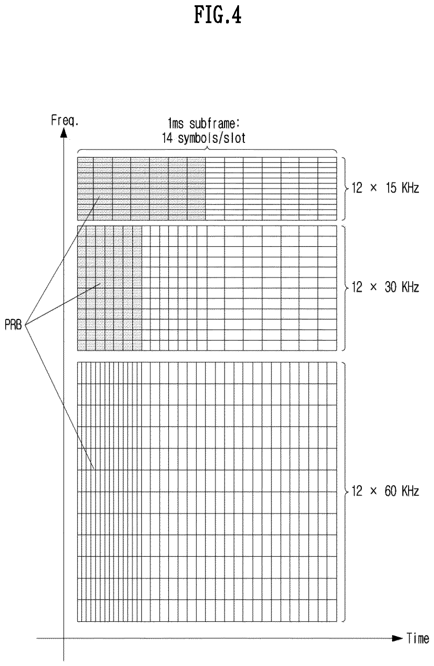

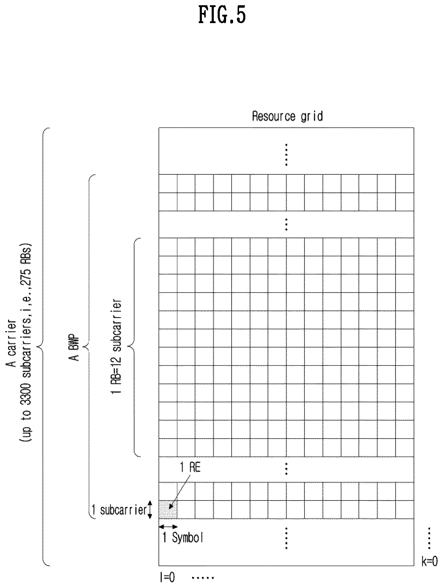

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

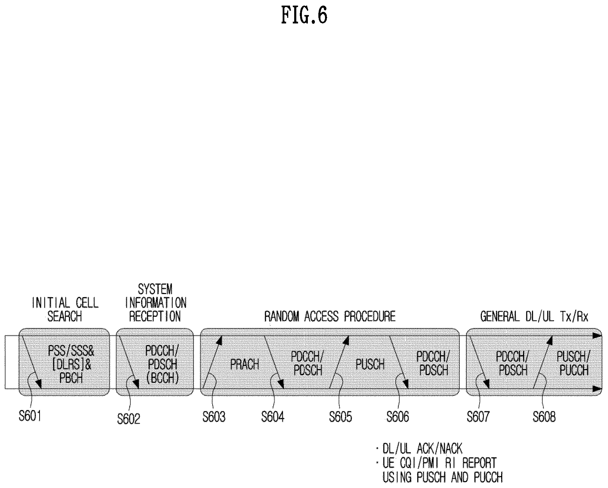

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH (Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB (physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Wireless communication system supporting unlicensed band/shared spectrum

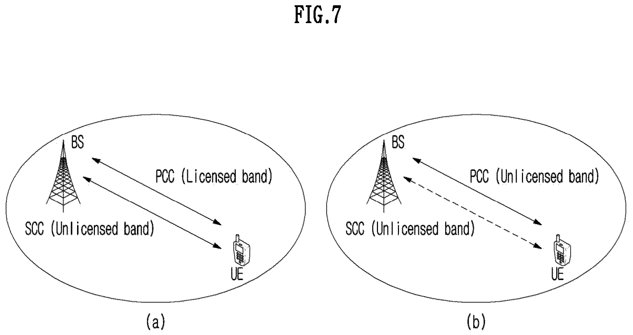

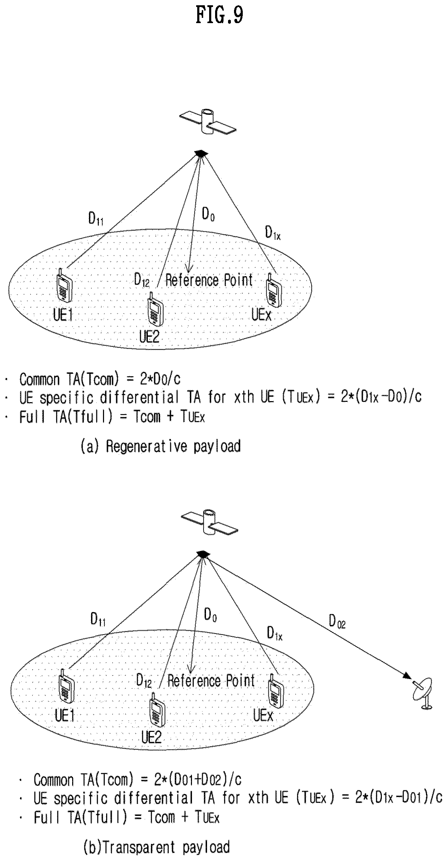

FIG. 7 shows an example of a wireless communication system supporting an unlicensed band applicable to the present disclosure. For example, FIG. 9 illustrates an unlicensed spectrum (NR-U) wireless communication system.

In the following description, a cell operating in a licensed-band (L-band) is defined as an LCell, and a carrier of the LCell is defined as a (downlink/uplink) LCC. In addition, a cell operating in an unlicensed band (U-band) is defined as a UCell, and a carrier of the UCell is defined as a (downlink/uplink) UCC. The carrier/carrier-frequency of a cell may mean an operating frequency (e.g., center frequency) of the cell. A cell/carrier (e.g., a component carrier (CC)) is collectively referred to as a cell.

As shown in (a) of FIG. 7, when a terminal and a base station transmit and receive signals through carrier aggregation (CA) LCC and UCC, the LCC may be configured as a primary CC (PCC) and the UCC may be configured as a secondary CC (SCC). And, as shown in (b) of FIG. 7, the terminal and the base station may transmit and receive signals through one UCC or a plurality of UCCs combined with carriers. That is, the terminal and the base station may transmit and receive signals only through UCC(s) without LCC. For standalone operation, PRACH, PUCCH, PUSCH, SRS transmission, etc. may be supported in UCell.

For example, the unlicensed band may be included in a specific frequency range (e.g., from 52.6 GHz to 71 GHz) higher than the existing frequency range (e.g., FR1 and FR2). The specific frequency range may be referred to as FR2-2 (in this case, the existing FR2 (i.e., 24250 MHz - 52600 MHz) may be referred to as FR2-1) or may be referred to as FR3. The scope of this disclosure is not limited to the designations FR2-2 or FR3.

A wireless communication system supporting a non-terrestrial network (NTN)

NTN refers to a network or a segment of a network configured to use a radio resource (RF resource) in a satellite or unmanned aircraft system (UAS) platform. In order to secure wider coverage or to provide a wireless communication service in a place where it is not easy to install a wireless communication base station, the use of the NTN service is being considered.

Here, the NTN service refers to providing a wireless communication service to UEs by installing a base station on an artificial satellite(e.g., geostationary-orbit, low-orbit, medium-orbit satellite, etc.), an airplane, an unmanned aerial vehicle, a drone, etc. rather than on the ground. In the following description, the NTN service may include an NR NTN service and/or an LTE NTN service. A terrestrial network (TN) service refers to providing a wireless communication service to UEs by installing a base station on the ground.

A frequency band considered for the NTN service may be a 2 GHz band (S-band: 2-4 GHz) in the frequency range 1 (FR1) (e.g., 410 MHz to 7.125 GHz), and a downlink 20 GHz and uplink 30 GHz band (Ka-Band: 26.5~40GHz) in the frequency range 2(FR2). Additionally, the NTN service may be supported in a frequency band between 7.125 GHz and 24.25 GHz or in a frequency band of 52.6 GHz or higher.

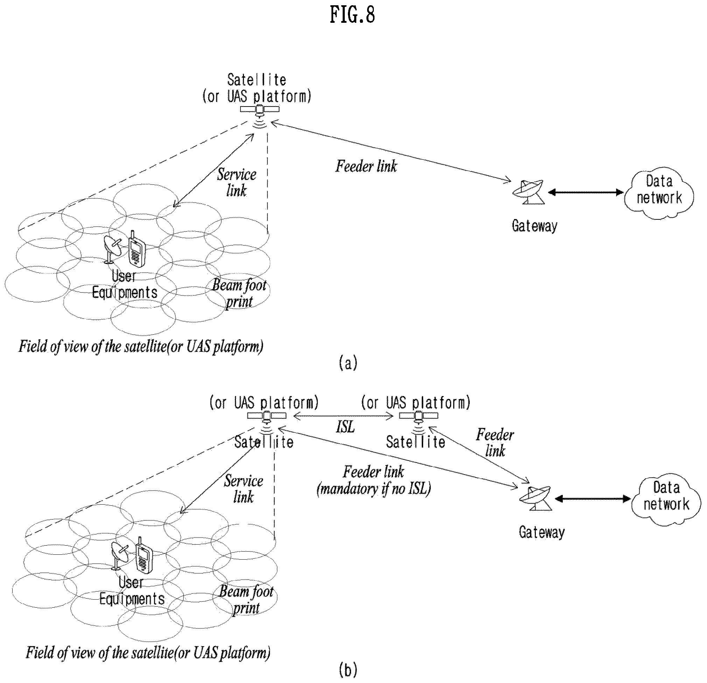

FIG. 8 is a diagram for describing NTN supported by a wireless communication system to which the present disclosure may be applied.

FIG. 8 (a) illustrates an NTN scenario based on a transparent payload (transparent payload) and FIG. 8 (b) illustrates an NTN scenario based on a regenerative payload (regenerative payload).

Here, the NTN scenario based on the transparent payload is a scenario in which an artificial satellite that has received a payload from a terrestrial base station transmits the corresponding payload to the UE, and the NTN scenario based on the regenerative payload refers to a scenario in which an artificial satellite is implemented as a base station (gNB).

NTNs are typically characterized by the following elements:

- one or more satellite-gateways for connecting NTN to public data networks:

A geostationary earth orbiting (GEO) satellite is fed by one or more satellite-gateways that are deployed in coverage targeted by the satellite (e.g., regional or continental coverage). A UE in a cell may be assumed to be served by only one satellite-gateway.
Non-GEO satellites may be successively served by one or more satellite-gateways. At this time, the wireless communication system guarantees service and feeder link continuity between the serving satellite-gateways for a time period sufficient to proceed with mobility anchoring and handover.

- A feeder link or radio link between the satellite-gateway and the satellite (or UAS platform)
- Service link or radio link between the UE and the satellite (or UAS platform)
- A satellite (or UAS platform) capable of implementing either a transparent or a regenerated (including on-board processing) payload.

Satellite (or UAS platform) generated beams generally generate a plurality of beams in a service area bounded by the field of view of the satellite (or UAS platform). The footprint of the beam is generally elliptical. The view of the satellite (or UAS platform) is determined by the onboard antenna diagram and the minimum elevation angle.

Transparent Payload: radio frequency filtering, frequency conversion and amplification. Accordingly, the waveform signal repeated by the payload is un-changed.

Regenerative payload: radio frequency filtering, frequency transformation and amplification as well as demodulation/decoding, switching and/or routing, coding/modulation. This is effectively equivalent to having all or part of the base station functions (e.g. gNB) on a satellite (or UAS platform).

- Inter-satellite links (ISL) for satellite groups. This requires a regenerative payload on the satellite. ISLs may operate at RF frequencies or optical bands.
- The UE is serviced by a satellite (or UAS platform) within the target service area.

Table 6 illustrates the types of satellites (or UAS platforms).

[Table 6]

| Platform | Altitude range | Orbit | Typical beam footprint size |
|---|---|---|---|
| Low-Earth Orbit (LEO) satellite | 300 - 1500 km | Circular around the earth | 100 - 1000 km |
| Medium-Earth Orbit (MEO) satellite | 7000 - 25000 km | | 100 - 1000 km |
| Geostationary Earth Orbit (GEO) satellite | 35 786 km | notional station keeping position fixed in terms of elevation/azimuth with respect to a given earth point | 200 - 3500 km |
| UAS platform (including HAPS) | 8 - 50 km (20 km for HAPS) | | 5 - 200 km |
| High Elliptical Orbit (HEO) satellite | 400 - 50000 km | Elliptical around the earth | 200 - 3500 km |

Typically, GEO satellites and UAS are used to provide continental, regional or local services. And, a constellation of low earth orbiting (LEO) and medium earth orbiting (MEO) is used to provide services in both the northern and southern hemispheres. Alternatively, the corresponding constellation may provide global coverage including the polar region. In the future, appropriate orbital inclination, sufficient beams generated and inter-satellite links may be required. In addition, a highly elliptical orbiting (HEO) satellite system may be considered. Hereinafter, a wireless communication system in NTN including the following six reference scenarios will be described.

Circular orbiting and notional station keeping platforms.

Highest RTD (Round Trip Delay) constraint

Highest Doppler constraint

A transparent and a regenerative payload

One ISL case and one without ISL case. Regenerative payload for inter-satellite links

The six reference scenarios are considered in Tables 7 and 8.

[Table 7]

|  | Transparent satellite | Regenerative satellite |
|---|---|---|
| GEO based non-terrestrial access network | Scenario A | Scenario B |
| LEO based non-terrestrial access network: steerable beams | Scenario C1 | Scenario D1 |
| LEO based non-terrestrial access network: the beams move with the satellite | Scenario C2 | Scenario D2 |

[Table 8]

| Scenarios | GEO based non-terrestrial access network (Scenario A and B) | LEO based non-terrestrial access network (Scenario C & D) |
|---|---|---|
| Orbit type | notional station keeping position fixed in terms of elevation/azimuth with respect to a given earth point | circular orbiting around the earth |
| Altitude | 35,786 km | 600 km<br>1,200 km |
| Spectrum (service link) | In FR1 (e.g., 2 GHz)<br>IN FR2 (e.g., DL 20 GHz, UL 30 GHz) | |
| Max channel bandwidth capability (service link) | 30 MHz in FR1<br>1 GHz in FR2 | |
| Payload | Scenario A : Transparent (including radio frequency function only)<br>Scenario B: regenerative (including all or part of RAN functions) | Scenario C: Transparent (including radio frequency function only)<br>Scenario D: Regenerative (including all or part of RAN functions) |
| Inter-Satellite link | No | Scenario C: No<br>Scenario D: Yes/No (Both cases are possible.) |
| Earth-fixed beams | Yes | Scenario C1: Yes (steerable beams), see note 1<br>Scenario C2: No (the beams move with the satellite)<br>Scenario D 1: Yes (steerable beams), see note 1<br>Scenario D 2: No (the beams move with the satellite) |
| Max beam foot print size (edge to edge) regardless of the elevation angle | 3500 km (Note 5) | 1000 km |
| Min Elevation angle for both sat-gateway and user equipment | 10° for service link and 10° for feeder link | 10° for service link and 10° for feeder link |

(continued)

| Scenarios | GEO based non-terrestrial access network (Scenario A and B) | LEO based non-terrestrial access network (Scenario C & D) |
|---|---|---|
| Max distance between satellite and user equipment at min elevation angle | 40,581 km | 1,932 km (600 km altitude)<br><br>3,131 km (1,200 km altitude) |
| Max Round Trip Delay (propagation delay only) | Scenario A: 541.46 ms (service and feeder links)<br><br>Scenario B: 270.73 ms (service link only) | Scenario C: (transparent payload: service and feeder links)<br>25.77 ms (600km)<br>41.77 ms (1200km)<br>Scenario D: (regenerative payload: service link only)<br>12.89 ms (600km)<br>20.89 ms (1200km) |
| Max differential delay within a cell (Note 6) | 10.3 ms | 3.12 ms and 3.18 ms for respectively 600km and 1200km |
| Max Doppler shift (earth fixed user equipment) | 0.93 ppm | 24 ppm (600km)<br><br>21ppm (1200km) |
| Max Doppler shift variation (earth fixed user equipment) | 0.000 045 ppm/s | 0.27ppm/s (600km)<br><br>0.13ppm/s (1200km) |
| User equipment motion on the earth | 1200 km/h (e.g. aircraft) | 500 km/h (e.g. high speed train)<br>Possibly 1200 km/h (e.g. aircraft) |
| User equipment antenna types | Omnidirectional antenna (linear polarisation), assuming 0 dBi<br><br>Directive antenna (up to 60 cm equivalent aperture diameter in circular polarisation) | |
| User equipment Tx power | Omnidirectional antenna: UE power class 3 with up to 200 mW<br><br>Directive antenna: up to 20 W | |
| User equipment Noise figure | Omnidirectional antenna: 7 dB<br><br>Directive antenna: 1.2 dB | |
| Service link | 3GPP defined New Radio | |
| Feeder link | 3GPP or non-3GPP defined Radio interface | 3GPP or non-3GPP defined Radio interface |

NOTE 1: Each satellite may have the capability to steer beams towards fixed points on earth using beamforming techniques. This is applicable for a period of time corresponding to the visibility time of the satellite. NOTE 2: Max delay variation within a beam (earth fixed user equipment) is calculated based on Min Elevation angle for both gateway and user equipment.

NOTE 3: Max differential delay within a beam is calculated based on Max beam foot print diameter at nadir NOTE 4: Speed of light used for delay calculation is 299792458 m/s.

NOTE 5: The Maximum beam foot print size for GEO is based on current state of the art GEO High Throughput systems, assuming either spot beams at the edge of coverage (low elevation).

NOTE 6: The maximum differential delay at the cell level is calculated by considering the delay at the beam level for the largest beam size. When the beam size is small or medium, the cell may contain more than one beam. However, the cumulative differential delay of all beams in the cell does not exceed the maximum differential delay at the cell level in Table 8.

NTN-related descriptions in this disclosure may be applied to NTN GEO scenarios and all NGSO (non-geostationary orbit) scenarios with circular orbits with an altitude of 600 km or more.

In addition, the above-described contents (NR frame structure, NTN, etc.) may be applied in combination with methods to be described later, and may be supplemented to clarify the technical characteristics of the method described in the present disclosure.

A method for configuring timing advance (TA) value in NTN

In the TN, since the UE moves within a cell, even if the distance between the base station and the UE changes, the PRACH preamble transmitted by the UE may be transmitted to the base station within the time duration of a specific RACH occasion (RO).

In addition, the TA value for the UE to transmit an uplink signal/channel may include an initial TA value and a TA offset value. Here, the initial TA value and the TA offset value may be indicated by the base station as a TA value expressible in the cell coverage range of the base station.

As another example, when the base station indicates a PDCCH order through DCI, the UE may transmit a PRACH preamble to the base station. The UE may transmit an uplink signal/channel to the base station by using the TA value (i.e., the initial TA value) indicated through the response message (random access response, RAR) to the preamble received from the base station.

In NTN, the distance between the satellite and the UE changes due to the movement of the satellite regardless of the movement of the UE. To overcome this, the UE may determine the position of the UE through the GNSS (global navigation satellite system) and calculate the round trip delay (RTD) (or/and, round trip time (RTT)) between the UE and the satellite, which is the UE-specific TA, through the ephemeris information of the satellite indicated by the base station.

Additionally or alternatively, scheduling offsets K_offset and k_mac may be defined to efficiently operate NTN systems with very long RTT.

Here, K_offset may mean the RTT of the uplink time synchronization reference point (RP). K_offset may mean the sum of the service link RTT and the common TA (if indicated). And, k_mac may mean an offset indicating the RTT between the RP and the base station.

A UE-specific TA may be configured such that when a PRACH preamble is transmitted in a RO selected by the UE, the satellite (or base station (gNB)) may receive the PRACH preamble within the time period of the RO.

And, when only a UE-specific TA is applied when a PRACH preamble is transmitted in a RO selected by the UE, the PRACH preamble may be transmitted to the satellite (or gNB) with a delay greater than the reference time of the RO. In this case, the initial TA value indicated by the RAR received from the base station may indicate the delayed value.

Additionally, a common TA may mean an RTD between a gNB (or reference point) on the ground and a satellite. Here, the reference point may mean a place where downlink and uplink frame boundaries match. And, the common TA may be defined as something that the base station indicates to the UE. If the reference point is on the satellite, the common TA may not be indicated, and if the reference point is on the gNB on the ground, the common TA may be used to compensate for the RTD between the gNB and the satellite.

Additionally, NTN may configure the TA value before transmission of message (Msg) 1 (e.g., PRACH preamble)/Msg A (e.g., PRACH preamble and PUSCH) to UE-specific TA and common TA (if provided). Here, UE-specific TA may be RTD between UE and satellite calculated by UE itself as described above.

As an embodiment of the present disclosure, FIG. 8 illustrates a method of calculating a TA value in a wireless communication system supporting NTN.

FIG. 9(a) illustrates a regenerative payload based NTN scenario. The common TA (Tcom) (common to all UEs) may be calculated as 2D0(distance between the satellite and the reference signal)/c, and the UE-specific differential TA (TUEx) for the x-th UE (UEx) may be calculated as 2(D1x-D0)/c. The total TA (Tfull) may be calculated as 'Tcom + TUEx'. Here, D1x may mean a distance between the satellite and UEx and c may represent the speed of light.

FIG. 9(b) illustrates a transparent payload based NTN scenario. The common TA (Tcom) (common to all UEs) may be calculated as 2(D01+D02)/c, and the UE-specific differential TA (TUEx) for the x-th UE (UEx) may be calculated as 2(D1x-D0)/c. The total TA (Tfull) may be calculated as 'Tcom + TUEx'. Here, D01 may mean a distance between a satellite and a reference point, and D02 may mean a distance between a satellite and a base station located on the ground.

Additionally or alternatively, in the NTN system, the UE may calculate/obtain a UE-specific TA based on GNSS capabilities and base station indication/configuration information (e.g., ephemeris information, valid section related information, etc.). The UE may calculate/obtain a common TA based on common TA parameters indicated/configured by the base station.

The uplink frame number for transmission from the UE may start

$$T_{\text{TA}} = \left( N_{\text{TA}} + N_{\text{TA,offset}} + N_{\text{TA,adj}}^{\text{common}} + N_{\text{TA,adj}}^{\text{UE}} \right) T_{\text{c}}$$

before the corresponding downlink frame starts from the UE.

The UE may be provided with the TA offset value $N_{\text{TA,offset}}$ for the serving cell by 'n-TimingAdvanceOffset' for the serving cell. If the UE is not provided with 'n-TimingAdvanceOffset' for the serving cell, the UE may determine the default value $N_{\text{TA,offset}}$ of the TA offset for the serving cell. Except for the msgA transmission via PUSCH where $N_{\text{TA}}=0$ is used, $N_{\text{TA}}$ and $N_{\text{TA,offset}}$ may be configured by the base station or defined in advance. $N_{\text{TA,adj}}^{\text{common}}$ may be determined by the higher layer parameters 'TACommon', 'TACommonDrift', and 'TACommonDriftVariation'. $N_{\text{TA,adj}}^{\text{UE}}$ may be computed by the UE based on UE position and (if configured) serving-satellite-ephemeris-related higher-layers parameters. Otherwise (e.g., if the serving-satellite-ephemeris related higher layer parameters are not received) $N_{\text{TA,adj}}^{\text{UE}} = 0$.

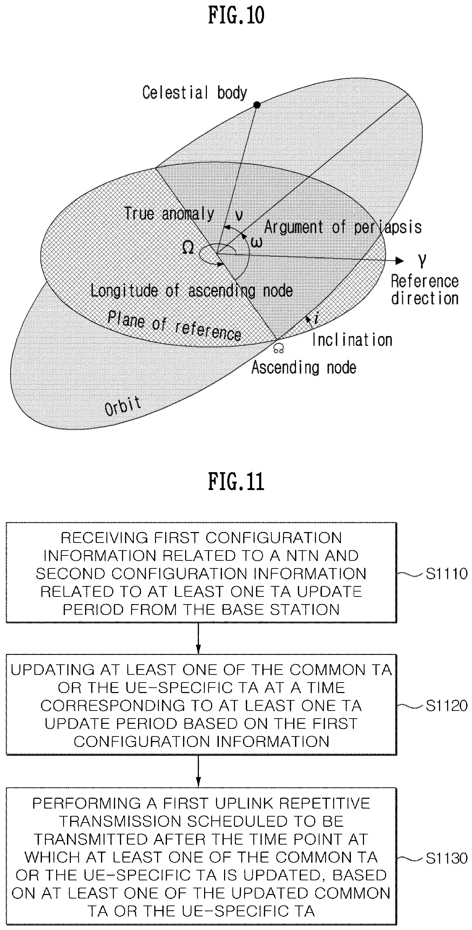

FIG. 10 is a diagram illustrating one format of satellite orbit information that may be applied to the present disclosure.

Two orbital formats may be supported in the NTN system: position and velocity state vector ephemeris format and orbital parameter ephemeris format.

As an example, the position and velocity state vector orbit format may be composed of 17 bytes or less (e.g., 132 bits). The field size for position (x, y, z) (m) may be 78 bits, and the field size for velocity (vx, vy, vz) (m/s) may be 54 bits.

As another example, the orbit parameter orbit format may be composed of 21 bytes or less (e.g., 164 bits). The components of the orbit parameter orbit format are as follows.

- Semi-major axis (half of the major axis of an elliptical satellite orbit) "α" [m] (e.g., 33 bits)
- Eccentricity "e" (in an elliptical satellite orbit, 0<e<1) (e.g., 20 bits)
- Argument of periapsis (the angle from the periapsis, the point where an object is closest to the center of the orbit, to the ascending node, which determines the direction of the ellipse in the orbital plane) "ω" (e.g., 28 bits) [rad]
- Longitude of ascending node (the angle measured counterclockwise from the reference point (e.g., the vernal equinox in the Solar System) to the ascending node (the point where the orbit passes above the reference plane)) "Ω" (e.g., 28 bits) [rad]
- Inclination (the degree to which the ellipse is tilted relative to the reference plane, from the ascending node to the (measured as the angle between the orbital plane and the reference plane) "i" (e.g., 27 bits) [rad]
- mean anomaly (an angle that varies continuously over time, which is mathematically convenient, but does not correspond to a geometric angle) "M0" = M(t0) at epoch t0 [JD] (e.g., 28 bits) [rad]

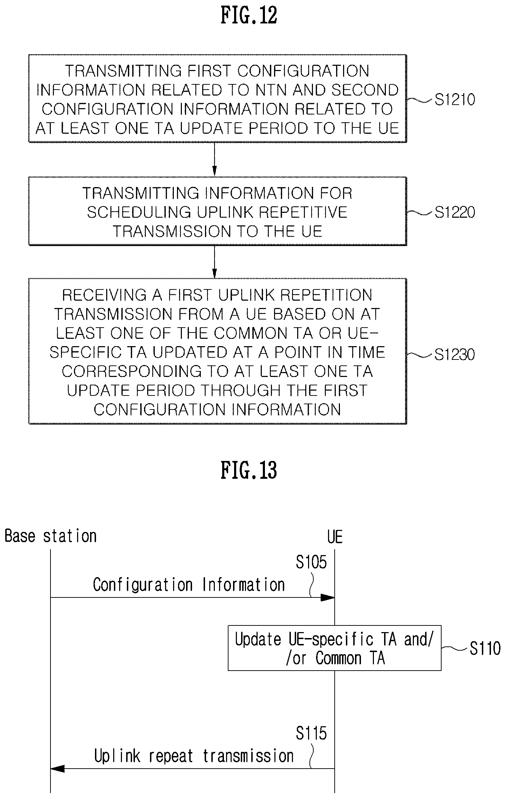

Here, the mean anomaly may also be expressed as the true anomaly ("v"). The true anomaly value represents the angle between the orbital periapsis and the orbiting object at any point in time, so it is consistent with the geometric angle. Therefore, the true anomaly is shown in FIG. 12, but the mean anomaly is not shown.

In satellite-based communications, circular polarization techniques may be used to increase the straightness of radio waves. The base station may transmit SIB or/and RRC signaling to the UE to configure/indicate which polarization information to use.

The polarization types that the base station configures for the terminal may include linear, RHCP (right-hand circular polarization), LHCP (left-hand circular polarization), etc.

UL segment enabling and joint channel estimation method

Various channel/signal repetition transmission operations defined to improve UL coverage of a basic wireless communication system may also be applied to the NR NTN system. Hereinafter, a UL segment activation method and a joint channel estimation method considering a validity window (i.e., DMRS bundling operation) according to an embodiment of the present disclosure are described.

Here, the joint channel estimation method means a method of jointly estimating the channel status of multiple communication links. When DMRS bundling is configured, the UE may perform the joint channel estimation method using DMRS received over a specific time unit (e.g., aggregated slot, etc.).

The present disclosure may be applied in combination with the above-described contents (e.g., NR frame structure, RACH procedure, U-band system, etc.). In addition, the methods related to configuring PRACH transmission occasions to be described later may be equally applied to an uplink signal transmission and reception method.

For example, uplink transmission through methods related to PRACH transmission opportunity configuration described later may be performed in an L-cell and/or U-cell defined in an NR system or a U-Band system.

FIG. 11 is a diagram for explaining an uplink transmission operation of a UE in a wireless communication system to which the present disclosure can be applied. The wireless communication system in FIG. 11 and FIG. 12 may be a non-terrestrial network (NTN) system, but is not limited thereto.

And, the uplink (repeated) transmission may include at least one of a physical random access channel (PRACH) (repeated) transmission, a PUCCH repeated transmission, or a PUSCH repeated transmission.

The UE may receive first configuration information related to a non-terrestrial network (NTN) and second configuration information related to at least one timing advance (TA) update period from the base station (S1110).

Specifically, the UE may receive first configuration information related to a non-terrestrial network (NTN) from a base station via higher layer signaling (e.g., SIB (e.g., 'SIB 19') and/or RRC signaling (e.g., 'NTN-Config').

For example, the first configuration information may include at least one of ephemeris information related to a serving satellite, common TA parameters, and information related to a validity duration for at least one of the ephemeris information or the common TA parameters.

And, at least one TA update period means a period (or/and, a point in time corresponding to the period) during which the UE may update at least one of the common TA or the terminal-specific TA.

The at least one TA update period may include a common-TA update period capable of updating the common TA and a UE-specific update period capable of updating the UE-specific TA. Additionally or alternatively, the at least one TA update period may consist of a single TA update period capable of updating the common TA and the UE-specific TA.

The UE may update at least one of the common TA or the UE-specific TA at a time corresponding to at least one TA update period based on the first configuration information (S1120).

As an example of the present disclosure, the UE may update the common TA at a time corresponding to the common TA update period by using common TA parameters, etc., and the UE may update the UE-specific TA at a time corresponding to the UE-specific TA update period.

That is, the UE may update the common TA according to the common TA update period, and may update the UE-specific TA according to the UE-specific TA update period.

Additionally or alternatively, the UE may update the common TA and the UE-specific TA at a point in time corresponding to a single TA update cycle based on the first configuration information.

That is, the UE may update the common TA and the UE-specific TA in accordance with a single TA update period.

The UE may perform a first uplink repetitive transmission scheduled to be transmitted after the time point at which at least one of the common TA or the UE-specific TA is updated, based on at least one of the updated common TA or the UE-specific TA (S1130).

Specifically, the UE may apply the updated common TA or/and the UE-specific TA for the first uplink repetitive transmission scheduled/configured/activated after i) a time corresponding to at least one TA update period and/or ii) a time corresponding to at least one of the common TA or the UE-specific TA is updated.

Here, the first uplink repeat transmission may be scheduled/configured/activated by the base station to be completed before the timer configured by the information related to the valid period expires.

Additionally or alternatively, at least one of the updated common TA or UE-specific TA may be maintained until the first uplink repeat transmission is completed.

Additionally or alternatively, the entire uplink repeat transmission scheduled/configured/activated by the base station may include a first uplink repeat transmission and a second uplink repeat transmission.

Here, based on the second uplink repeat transmission being scheduled/configured/activated by the base station to be performed after the timer configured by the information related to the valid duration expires, the UE may drop the second uplink repeat transmission or perform it based on at least one of the updated common TA or UE-specific TA.

As an example of the present disclosure, at least one of the common TA or UE-specific TA is updated at the boundary of the valid duration (i.e., the time point at which the valid timer is (re)started), the operation may be configured/defined as a first event (or a semi-static event) to perform at least one of PUCCH DM(demodulation)-RS(reference signal) bundling or PUSC) DM-RS bundling.

As another example, an operation in which at least one of the common TA or the UE-specific TA is updated within the valid duration may be configured/defined as a second event (or a dynamic event) to perform at least one of PUCCH DM-RS bundling or PUSCH DM-RS bundling.

FIG. 12 is a diagram for explaining an uplink reception operation of a base station in a wireless communication system according to one embodiment of the present disclosure.

The base station may transmit first configuration information related to NTN and second configuration information related to at least one TA update period to the UE (S1210).

Descriptions related to the first configuration information and the second configuration information have been described with reference to Fig. 11, so any duplicate description will be omitted.

The base station may transmit information to the UE for scheduling (or configuring and/or activating) uplink repetitive transmission (S1220).

For example, the base station may transmit information to the UE to schedule/configure/activate full uplink repeat transmission via RRC signaling, MAC CE, or/and DCI.

The base station may receive a first uplink repeat transmission from the UE based on at least one of a common TA or a UE-specific TA updated by the UE (S1230).

Here, at least one of the common TA or the UE-specific TA may be performed by the UE at a time corresponding to at least one TA update period. And, the first uplink repetitive transmission may be scheduled/configured/activated to be transmitted after the time at which at least one of the common TA or the UE-specific TA is updated.

The operations and parameters related to S1230 correspond to the operations and parameters related to S1130, so any duplicate description will be omitted.

Hereinafter, a UL segment activation method and a joint channel estimation method considering a valid window are specifically described.

Embodiment 1

Embodiment 1 relates to a method for configuring a UL segment when repeat transmission is performed in an NTN system.

To improve coverage of NTN systems (e.g., NR NTN, etc.), repetitive transmissions may be defined/configured/indicated. For low-orbit satellites such as LEO, common TA and/or UE-specific TAs need to be changed/modified in the middle of performing repetitive transmissions. To address this, a UE may be defined/configured/instructed to update open-loop TAs (e.g., common TA and/or UE-specific TA) in the middle of performing repetitive transmissions (depending on UE implementation).

Additionally or alternatively, the UL segment introduced/defined in the IoT NTN may also be introduced/defined in the NR NTN, etc. Here, a unit that sets/maintains the same UL TA value when a terminal transmits a UL signal/channel (e.g., PRACH, PUSCH, PUCCH, etc.) may be defined as a UL (transmission) segment.

For NR NTN, unlike IoT NTN, the repetition number (i.e., the number of times/occasions of performing repeated transmission) may not be large. In addition, for NR NTN, while the UE performs repeated transmission, the base station may transmit information for closed-loop TA (i.e., NTA) modification/update to the UE via MAC-CE/RRC signaling, etc. Accordingly, the common TA and/or UE-specific TA may not need to be updated while repeated transmission is performed.

Therefore, when the UL segment concept is defined/introduced to NR NTN, a (conditional) UL segment may be set as in at least one of Embodiments 1-1 to 1-3.

Embodiment 1-1

Embodiment 1-1 relates to a method for determining whether to apply a UL segment based on the number of repetitions of a UL signal/channel configured/indicated by a base station.

As an example of the present disclosure, it is assumed that the number of repetitions of a specific predefined UL signal/channel is N (e.g., N=4). Here, a specific value of the number of predefined repetitions for each UL signal/channel can be independently configured/indicated.

If the number of repetitions configured/indicated by the base station is less than or equal to N, the UL segment may be set not to be applied. In this case, the UE may be configured not to update the UE-specific TA and/or common TA during repeated transmission.

As another example of the present disclosure, a UL segment may be configured to be applied when the number of repetitions configured/indicated by the base station is N or more.

Here, the UE may be configured/indicated not to change the UE-specific TA and/or common TA during the UL segment (based on the UL segment value indicated from the base station) when performing repeated transmission, and to update the UE-specific TA and/or common TA before entering the next UL segment.

Embodiment 1-2

Embodiment 1-2 relates to a method for determining whether to apply a UL segment according to a UL slot counting type configured/indicated by a base station (when transmitting PUSCH) .

As an example of the present disclosure, when a physical slot-based counting type is configured/indicated, a UL segment may be configured/defined not to be applied. In this case, the UE may be configured not to update the UE-specific TA and/or common TA while performing repeated transmission.

In another example of the present disclosure, when an available slot-based counting type is configured/indicated, a UL segment may be configured/defined to be applied. In this case, when a UE performs repeated transmission, the UE may be configured/indicated not to change the UE-specific TA and/or the common TA during the UL segment (based on the UL segment value indicated from the base station), and to update the UE-specific TA and/or the common TA before entering the next UL segment.

As another example of the present disclosure, in FD-FDD, but not TDD or HD-FDD, the determination of whether to set up a UL segment may be made similarly to the operation in the available slot-based counting type and the physical slot-based counting type.

For example, in case of TDD or HD-FDD, the UL segment may be configured to be applied. As another example, in case of FD-FDD, the UL segment may be configured not to be applied.

As another example of the present disclosure, when a UL segment is indicated at a slot level, counting may be performed based on a physical slot rather than on an available slot basis.

Embodiment 1-3

Embodiment 1-3 relates to a case where the base station does not provide higher layer signaling indicating a UL segment value. That is, in Embodiments 1-3-1 and 1-3-2 below, it is assumed that the UE does not receive higher layer signaling indicating a UL segment value from the base station.

Embodiment 1-3-1

It is assumed that the repetitive transmission of the UL signal/channel configured/indicated by the base station exists within a time period in which the timer of a specific validity window does not expire. In other words, it is assumed that the time point of the repetitive transmission of the UL signal/channel scheduled/configured/activated by the base station exists within a specific validity window.

For example, until the repeated transmission is completed, the UE may maintain (i.e., not update) the UE-specific TA and/or common TA configured before the first transmission (during the repeated transmission). Then, the UE may perform the repeated transmission based on the maintained UE-specific TA and/or common TA.

As another example, the UE may update the UE-specific TA and/or common TA before each repeated transmission, and perform a transmission operation based on the total TA based on the updated UE-specific TA and/or common TA.

As another example, a TA update period for each of the UE-specific TA and/or common TA (or, a combined one) may be configured/indicated for the UE. The UE may update the UE-specific TA and/or common TA according to the TA update period.

For example, assume that the TA update period is configured/indicated by the base station to a specific value (e.g., N slots, etc.). In this case, the UE may update the UE-specific TA and/or common TA according to the TA update period configured/indicated to a specific value. Accordingly, the base station may efficiently determine the time point when the UE updates the UE-specific TA and/or common TA in order to perform DMRS bundling.

And, the UE may apply the updated UE-specific TA and/or common TA to the repetitive transmission performed after the update point in time/TA update period. That is, the UE may perform the repetitive transmission after the update point in time/TA update period based on the updated UE-specific TA and/or common TA.

As another example, the UE may pre-calculate appropriate UE-specific TA and/or common TA at each time point of repeated transmission. The UE may calculate an overall TA value based on the pre-calculated UE-specific TA and/or common TA values just before actual repeated transmission, and perform repeated transmission based on the overall TA value.

Embodiment 1-3-2

Assume that some of the transmission points during the repeated transmission of the UL signal/channel configured/indicated by the base station exist after the time point at which the timer of the valid window is expected to expire (or/and after the time point at which the timer of the valid window is expected to restart upon receipt of additional information).

As an example of the present disclosure, when the timer of a valid window is (re) started as additional information (e.g., ephemeris information or/and common TA parameters) is transmitted during a repeat transmission, the updated UE-specific TA and/or common TA may be applied to the entire TA starting from the UL signal/channel to be transmitted after that point in time (i.e., the point in time when the additional information is received or/and the point in time when the timer of the valid window is (re)started). The UE may perform the repeat transmission based on the updated UE-specific TA and/or common TA.

As another example of the present disclosure, the UE may determine that only the repeated transmissions indicated within the existing valid window (i.e., the preset valid window) are valid. Then, the UE may perform only the repeated transmissions of the UL signals/channels set/indicated within the existing valid window, and may drop the repeated transmissions of the remaining UL signals/channels (i.e., the UL signals/channels set/indicated after the existing valid window).

The method according to at least one of the above-described embodiments may be applied to all UL signals/channels. And, the method according to at least one of the above-described embodiments may be applied to each independent UL signal/channel.

Embodiment 2

Embodiment 2 relates to a method of operating a UE according to UL segment and valid window configurations.

When a UL segment is defined/configured/indicated for repeated transmission, the UL segment and the valid window (or, valid period) may be configured independently of each other. Accordingly, the boundary of the UL segment and the boundary of the valid window may coincide or may be different from each other.

In Embodiments 2-1, 2-2, and 2-3, operations for a UE and a base station according to the relationship between the boundary of a UL segment and the boundary of a valid window are described.

Embodiment 2-1

Assume that the boundary of the UL segment and the boundary of the valid window coincide with each other.

(For simple terminal operation) The base station may configure/indicate the UE so that the boundary of the UL segment coincides with the boundary of the valid window. That is, the UE may always expect that the boundary of the UL segment and the boundary of the valid window are configured/indicated to coincide.

Here, the boundary of the valid window may be configured to the point in time when the valid timer (re)starts as additional information is configured/indicated by the base station. That is, the point in time when the valid timer (re) starts may be configured to the epoch time of the additional information.

Accordingly, the subsequent UL segment may exist within the valid window corresponding to the (re)started valid timer. The UE may update the UE-specific TA and/or the common TA based on the newly received additional information, and obtain the entire TA based on the updated UE-specific TA and/or the common TA (i.e., apply the updated terminal-specific TA and/or the common TA to the entire TA). The UE may apply the entire TA from the subsequent UL segment.

Embodiment 2-2

Assume that the boundary of a UL segment is located in the middle of a valid window (i.e., the UL segment ends within the middle of a valid window).

That is, since the UL segment is terminated before the timer of the valid window expires, the updated UE-specific TA and/or common TA may be applied to the entire TA based on the previously configured parameters (i.e., the common TA parameters and/or ephemeris information). And, the entire TA may be configured to be applied to a subsequent UL segment. That is, the UE may perform repeated transmission by applying the entire TA in the subsequent UL segment.

Embodiment 2-3

Assume that the boundary of the valid window is located in the middle of the UL segment (i.e., the valid window ends within the middle of the UL segment).

As an example of the present disclosure, (regardless of whether additional information is received and the validity timer is restarted to match the epoch time) if the expiration of the validity timer corresponding to the existing validity window is after all repeat transmissions in the corresponding UL segment are completed, the UE may not update the UE-specific TA and/or common TA until the UL signal/channel repeat transmissions in the corresponding UL segment are completed. That is, the UE may perform repeat transmissions based on the UE-specific TA and/or common TA that have not been updated.

In another example of the present disclosure, (regardless of whether the validity timer is restarted to match the epoch time by receiving additional information) when the validity timer corresponding to the existing validity window expires within the UL segment, an action according to at least one of the following options may be performed by the UE.

Option 1: The UE may transmit the UL signals/channels that can be transmitted before the existing valid timer expires within the UL segment, and drop the remaining UL signals/channels.

Option 2: The UE may drop the UL signals/channels that are available for transmission before the existing validity timer expires in the corresponding UL segment, and update the UE-specific TA and/or common TA based on the newly received additional information. The UE may apply the updated UE-specific TA and/or common TA to all TAs and transmit the remaining UL signals/channels by applying the full TA.

Option 3: The UE may compare the number of UL signals/channels that can be transmitted before the existing validity timer expires in the UL segment with the number of UL signals/channels that can be transmitted after the existing validity timer expires, and may operate in either Option 1 or Option 2 based on the comparison result.

That is, the UE may identify a larger value among the number of UL signals/channels that can be transmitted before the existing validity timer expires within the corresponding UL segment and the number of UL signals/channels that can be transmitted after the existing validity timer expires, and perform an operation according to an option associated with the UL signal/channel corresponding to the identified value.

Here, if the number of UL signals/channels that can be transmitted before the existing validity timer expires within the corresponding UL segment and the number of UL signals/channels that can be transmitted after the existing validity timer expires are the same, the UE may perform the operation according to option 1.

The UE may update the UE-specific TA and/or common TA based on newly received additional information in a subsequent UL segment, and apply the updated terminal-specific TA and/or common TA to all TAs.

The method according to at least one of the above-described embodiments may be applied to all UL signals/channels. And, the method according to at least one of the above-described embodiments may be applied to each independent UL signal/channel.

For example, UL signals/channels such as PRACH preamble and/or Msg. 3 PUSCH may be defined/configured to be transmitted as in Option 1. And, UL signals/channels such as (normal) PUSCH and/or PUCCH may be defined/-configured to operate as in Option 2.

Embodiment 3

Embodiment 3 relates to a joint channel estimation method based on a valid window.

A joint channel estimation method through DMRS bundling for NR CE (coverage enhancement) is defined. However, in order to perform DMRS bundling for the joint channel estimation method, the terminal may not change the UL TA while performing PUSCH repeated transmission.

If the operation of performing DMRS bundling for joint channel estimation in CE of NR NTN is supported, the UE may be configured/indicated/defined to perform PUSCH repeated transmission without changing the overall TA value (including common TA and/or UE-specific TA).

Here, an NTN-specific valid window may be defined in the NR NTN. And, when the valid timer of the valid window is (re) started, the UE may update the common TA and/or the UE-specific TA based on the newly received additional information (i.e., common TA parameters and/or ephemeris information).

In Embodiments 3-1, 3-2, and 3-3, an operation of a terminal/base station for performing joint channel estimation based on a valid window is described.

Embodiment 3-1

Embodiment 3-1 relates to a method for configuring an effective window and a time domain window (TDW) (e.g., a set TDW, an actual TDW). Here, the actual TDW may mean a time period during which a DMRS is actually transmitted, and the nominal TDW may mean a time period during which a DMRS is expected to be transmitted (based on configuration information received from a base station).

The method a UE/base station performs may differ depending on how the valid window and actual (or configured) TDW are configured.

Method 1 : The size (or boundary) of the valid window and the actual (or configured) TDW may be configured to have a specific relationship (predefined or/and configured/indicated by the base station).

For example, the boundary of the valid window may be configured to coincide with the boundary of the actual (or configured) TDW.

As another example, the size of the actual (or configured) TDW may be configured to be smaller than or equal to the effective window. In this case, the actual (or configured) TDW size may be configured in the form of a multiple of the effective window size. As another example, the effective window size may be configured in the form of a multiple of the actual (or configured) TDW size.

Method 2: The valid window may be configured independently of the actual (or configured) TDW. In this case, the UE and base station may operate according to at least one of the options described below.

Option 1: If a boundary of a valid window exists in the middle of a configured TDW configured by a base station, the configured TDW may be divided into multiple actual TDWs based on the boundary of the valid window (regardless of UE capability).

That is, the configured TDW may be divided into two actual TDWs. After the first configured TDW is terminated, the updated common TA and/or UE-specific TA may be applied to the UL signal/channel to be transmitted in the second actual TDW that is restarted.

Option 2: If the UE implementation is configured/defined to be free to update open loop TAs (e.g., common TA, UE-specific TA) while repeat transmissions are performed, the UE may be configured/defined not to update the corresponding open loop TA within the actual (or configured) TDW.

Additionally or alternatively, the base station may be configured not to indicate the UE to perform a closed loop TA update. As another example, even if the base station indicates the UE to perform a closed loop TA update, the UE may ignore it.

Embodiment 3-2

Embodiment 3-2 relates to the operations of a base station and a UE when a UL segment is defined in an NR NTN.

The embodiments related to the valid window described above may also be applied to the UL segment. That is, in the embodiments related to the valid window and/or in the options, the valid window may be replaced with a UL segment.

As another example of the present disclosure, if the boundary of a configured (or actual) TDW does not match the boundary of a UL segment, an UL segment may be additionally defined based on the point in time when the configured (or actual) TDW ends and (re)starts. Additionally or alternatively, DMRS bundling operation may be configured to be supported only within PUSCHs to be repeatedly transmitted within a specific UL segment.

As another example of the present disclosure, if the base station does not explicitly indicate the UE to configure the TDW, the UE may be configured/defined to use min(number of repetitions, maximum duration) as a default value. Accordingly, the UL segment size value may be configured to be used as the maximum duration value in the NR NTN, or a value smaller than the UL segment size may be configured to be used as the maximum duration value.

As another example of the present disclosure, when a UE updates a common TA and/or a UE-specific TA, the UE may be configured to stop the configured (or actual) TDW and report it to the base station. The operation of the UE updating the common TA and/or the UE-specific TA and reporting it may be configured/defined to be performed in a time period corresponding to a UL segment boundary.

Additionally or alternatively, whether to apply a UL segment may be determined based on DMRS bundling configuration information configured/indicated by the base station.

For example, if a base station is configured to perform DMRS bundling, it may be configured/defined not to apply UL segments, and the UE may be configured not to update terminal-specific and/or common TAs during repeat transmission.

As another example, if the base station is configured not to perform DMRS bundling, it may be configured/defined to apply UL segments. In this case, the UE may be configured/indicated not to change the UE-specific TA and/or common TA during the UL segment (based on the UL segment value indicated from the base station) when performing repeated transmission, and to update the UE-specific TA and/or common TA before entering the next UL segment.

Additionally or alternatively, inter-slot bundling frequency hopping and UL segments may have a specific relationship. That is, the hopping size configured/indicated by the base station may have a specific relationship preconfigured (or indicated by the base station) with the UL segment size (or validity duration size).

For example, the size of inter-slot bundling frequency hopping may be configured/defined to be smaller than or equal to the UL segment size (or valid duration size). In this case, the size of inter-slot bundling frequency hopping may be configured/defined in the form of a divisor of the UL segment size (or valid duration size). As another example, the UL segment size (or valid duration size) may be configured/defined in the form of a multiple of the inter-slot bundling frequency hopping size.

Embodiment 3-3

TA update operations performed by a UE at different times may be defined as different types of events.

As an example of the present disclosure, a common TA and/or UE-specific TA update operation performed by a UE at the boundary of a valid duration (i.e., the point in time when a valid timer is (re)started) may be defined as an event. In this case, since the base station can know the expiration time and (re)start point of the valid timer, the event may be defined/configured as a semi-static event.

As another example of the present disclosure, a common TA and/or UE-specific TA update operation performed by a terminal within a valid duration, rather than at the boundary of the valid duration, may be defined/configured as an event. In this case, since the base station cannot know when the UE will update the common TA and/or UE-specific TA, the event may be configued as a dynamic event.

The method according to at least one of the above-described embodiments may be applied to all UL signals/channels. And, the method according to at least one of the above-described embodiments may be applied to each independent UL signal/channel.

The above-described embodiments may be configured/applied to other UL signals/channels such as PUSCH/-PUCCH. In addition, the above-described embodiments may also be included as one of the implementation methods of the present disclosure. In addition, the above-described embodiments may be implemented independently, but can also be implemented in the form of a combination (or merge) of some embodiments. Information on whether the above-described embodiments are applied (or information on the rules of the above-described embodiments) may be defined so that the base station notifies the UE through a predefined signal (e.g., a physical layer signal or a higher layer signal). The higher layer may include, for example, one or more of functional layers such as MAC, RLC, PDCP, RRC, and SDAP.

FIG. 13 is a diagram for describing the signaling procedure of the network side and the UE according to an embodiment of the present disclosure.

FIG. 13 shows an example of signaling between a network side and a terminal (UE) in an M-TRP situation to which the Embodiments (e.g., Embodiment 1, Embodiment 1-1, Embodiment 1-2, Embodiment 1-3, Embodiment 1-3-1, Embodiment 2, Embodiment 2-1, Embodiment 2-2, Embodiment 2-3, Embodiment 3, Embodiment 3-1, Embodiment 3-2, Embodiment 3-3 or a combination of one or more of the detailed Embodiments) of the present disclosure described above may be applied.

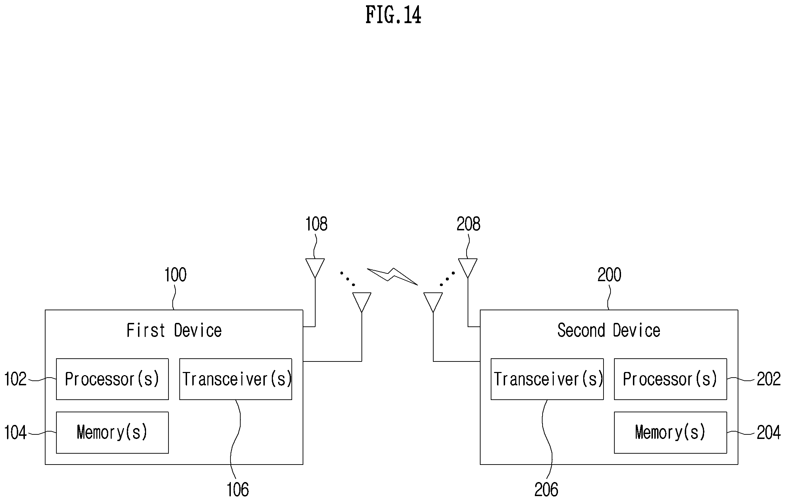

Here, the UE/network side is an example and may be replaced with various devices as described with reference to FIG. 14. FIG. 13 is for convenience of explanation and does not limit the scope of the present disclosure. Additionally, some step(s) shown in FIG. 13 may be omitted depending on the situation and/or settings. Additionally, in the operation of the network side/UE in FIG. 13, the above-described uplink transmission/reception operation, M-TRP-related operation, etc. may be referenced or used.

In the following description, the network side may be one base station including multiple TRPs, or may be one cell including multiple TRPs. Alternatively, the network side may include a plurality of remote radio heads (RRH)/remote radio units (RRU). For example, ideal/non-ideal backhaul may be set between TRP 1 and TRP 2, which constitute the network side. In addition, the following description is based on multiple TRPs, but it can be equally extended and applied to transmission through multiple panels/cells, and can also be extended and applied to transmission through multiple RRHs/RRUs, etc.

In addition, it is described based on a "TRP" in the following description, but as described above, a "TRP" may be applied by being substituted with an expression such as a panel, an antenna array, a cell (e.g., a macro cell/a small cell/a pico cell, etc.), a TP (transmission point), a base station (gNB, etc.), etc. As described above, a TRP may be classified according to information on a CORESET group (or a CORESET pool) (e.g., a CORESET index, an ID).

For example, if a single UE is configured to transmit and receive with multiple TRPs (or cells), this may mean that multiple CORESET groups (or CORESET pools) are configured for the single terminal. The configuration of such CORESET groups (or CORESET pools) may be performed via higher layer signaling (e.g., RRC signaling, etc.).

In addition, a base station may generally mean an object which performs transmission and reception of data with a terminal. For example, the base station may be a concept which includes at least one TP(Transmission Point), at least one TRP(Transmission and Reception Point), etc. In addition, a TP and/or a TRP may include a panel, a transmission and reception unit, etc. of a base station.

The UE may receive configuration information from the base station (S105).

For example, the configuration information may include NTN-related configuration information (e.g., NTN-config)/configuration information for uplink transmission and reception (e.g., PUCCH-config, PUSCH-config, and/or PRACH-related configuration information, etc.) described in the above-described embodiments (e.g., a combination of one or more of each embodiment or its detailed examples).

Additionally or alternatively, the configuration information may include information related to at least one TA update cycle (e.g., information for setting a single TA update period, information for configuring each of a common TA and a UE-specific TA update period, etc.).

Here, the above configuration information may be transmitted via higher layer (e.g., SIB, RRC signaling, or/and MAC CE) signaling.

For example, the operation of the UE (100 or 200 of FIG. 14) of the above-described step S105 receiving the configuration information from the base station (200 or 100 of FIG. 14) can be implemented by the device of FIG. 14, which will be described below. For example, referring to FIG. 14, one or more processors 102 may control one or more transceivers 106 and/or one or more memories 104, etc. to receive the configuration information, and one or more transceivers 106 may receive the configuration information from the network side.

The UE may update the terminal-specific TA and/or common TA based on the configuration information (S110).

Specifically, the UE may update the UE-specific TA and/or the common TA at a time corresponding to at least one TA update period. The at least one TA update period for performing an update of the UE-specific TA and/or the common TA may be within the boundary of the valid duration or within the valid duration.

For example, the operation of updating a UE-specific TA and/or a common TA by a terminal (100 or 200 of FIG. 14) of the above-described step S110 may be implemented by the device of FIG. 14 below. For example, referring to FIG. 14, one or more processors 102 may control one or more memories 104, etc. to update a terminal-specific TA and/or a common TA.

The UE may perform uplink repeat transmission (S115). Specifically, the base station may transmit information for scheduling/configuring/activating uplink repeat transmission to the terminal. The UE may perform uplink repeat transmission based on the information received from the base station.

And, the UE may perform uplink repeat transmission based on the updated UE-specific TA and/or common TA. For example, the UE may apply the updated terminal-specific TA and/or common TA to an uplink transmission scheduled to be transmitted after a time corresponding to a TA update period and/or after the UE-specific TA and/or common TA update time point.

For example, the operation of the UE (100 or 200 of FIG. 14) of the above-described step S115 performing uplink repeat transmission can be implemented by the device of FIG. 14 below. For example, referring to FIG. 14, one or more processors 102 can control one or more memories 104, etc. to transmit the uplink data/channel.

As mentioned above, the signaling and embodiments of the base station/terminal described above (e.g., a combination of one or more of each embodiment or detailed examples thereof) can be implemented by the apparatus described with reference to FIG. 14. For example, the base station may correspond to the first device (100), and the UE may correspond to the second device (200), and in some cases, the opposite case can also be considered.

For example, the signaling and operation of the base station/UE described above (e.g., a combination of one or more of each embodiment or its detailed examples) may be processed by one or more processors (e.g., 102, 202) of FIG. 14, and the signaling and operation of the base station/UE described above (e.g., a combination of one or more of each embodiment or its detailed examples) may be stored in a memory (e.g., one or more memories (e.g., 104, 204) of FIG. 14) in the form of instructions/programs (e.g., instructions, executable codes) for driving at least one processor (e.g., 102, 202) of FIG. 14.

General Device to which the Present Disclosure may be applied

FIG. 14 is a diagram which illustrates a block diagram of a wireless communication system according to an embodiment of the present disclosure.

In reference to FIG. 14, a first device 100 and a second device 200 may transmit and receive a wireless signal through a variety of radio access technologies (e.g., LTE, NR).

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts included in the present disclosure.

For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104.

A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts included in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts included in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts included in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts included in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206.

One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts included in the present disclosure. One or more processors 102, 202 may be referred to as a controller, a micro controller, a micro processor or a micro computer. One or more processors 102, 202 may be implemented by a hardware, a firmware, a software, or their combination. In an example, one or more ASICs (Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts included in the present disclosure may be implemented by using a firmware or a software and a firmware or a software may be implemented to include a module, a procedure, a function, etc. A firmware or a software configured to perform description, functions, procedures, proposals, methods and/or operation flow charts included in the present disclosure may be included in one or more processors 102, 202 or may be stored in one or more memories 104, 204 and driven by one or more processors 102, 202. Description, functions, procedures, proposals, methods and/or operation flow charts included in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. included in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. included in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method performed by a user equipment (UE) in a wireless communication system, the method comprising:

    receiving first configuration information related to a non-terrestrial network (NTN) and second configuration information related to at least one timing advance (TA) update period from a base station;
    updating at least one of a common TA or a UE-specific TA at a time corresponding to the at least one TA update period based on the first configuration information; and
    performing a first uplink repeat transmission scheduled to be transmitted after a time of updating at least one of the common TA or the UE-specific TA based on the updated at least one of the common TA or the UE-specific TA.

2. The method of claim 1, wherein:

    the at least one TA update period includes a common TA update period and a UE-specific TA update period, and
    based on the first configuration information:

the common TA is updated at a time corresponding to the common TA update cycle, and
the UE-specific TA is updated at a time corresponding to the UE-specific TA cycle.

3. The method of claim 1, wherein:
the common TA and UE-specific TA are updated based on the first configuration information at a time corresponding to a single TA update period.

4. The method of claim 1, wherein:
the first configuration information includes i) ephemeris information related to a serving satellite, ii) common TA parameters, and iii) information related to a validity duration for at least one of the ephemeris information or the common TA parameters.

5. The method of claim 4, wherein:
the first uplink repeat transmission is scheduled by the base station to be completed before a timer configured by information related to the valid duration expires.

6. The method of claim 4, wherein:

an entire uplink repeat transmission scheduled by the base station includes the first uplink repeat transmission and second uplink repeat transmission, and
based on the second uplink repeat transmission being scheduled by the base station to be performed after a timer configured by information related to the valid duration expiring, the second uplink repeat transmission is dropped or performed based on at least one of the updated common TA or UE-specific TA.

7. The method of claim 4, wherein:
an operation of updating at least one of the common TA or the UE-specific TA at a boundary of the valid duration is configured as a first event for performing at least one of physical uplink control channel (PUCCH) DM (demodulation)-RS (reference signal) bundling or physical uplink shared channel (PUSCH) DM-RS bundling.

8. The method of claim 4, wherein:
an operation in which at least one of the common TA or UE-specific TA is updated within the valid duration is configured as a second event for performing at least one of PUCCH DM-RS bundling or PUSCH DM-RS bundling.

9. The method of claim 1, wherein:
at least one of the updated common TA or UE-specific TA is maintained until the performance of the first uplink repeat transmission is completed.

10. The method of claim 1, wherein:
the uplink repeated transmission includes at least one of a physical random access channel (PRACH) repeated transmission, a PUCCH repeated transmission, or a PUSCH repeated transmission.

11. The method of claim 1, wherein:
the wireless communication system is a non-terrestrial network (NTN) system.

12. A user equipment (UE) in a wireless communication system, the UE comprising:

at least one transceiver; and
at least one processor connected to the at least one transceiver,
wherein the at least one processor is configured to:

receive first configuration information related to a non-terrestrial network (NTN) and second configuration information related to at least one timing advance (TA) update period from a base station through the at least one transceiver;
update at least one of a common TA or a UE-specific TA at a time corresponding to the at least one TA update period based on the first configuration information; and
perform a first uplink repeat transmission scheduled to be transmitted after a time of updating at least one of the common TA or the UE-specific TA based on the updated at least one of the common TA or the UE-specific TA.

13. A method for performing uplink reception by a base station in a wireless communication system, the method comprising:

transmitting first configuration information related to a non-terrestrial network (NTN) and second configuration information related to at least one timing advance (TA) update period to a user equipment (UE); transmitting information for scheduling uplink repeat transmission to the UE; and receiving a first uplink repeat transmission based on at least one of a common TA or a UE-specific TA updated at a time corresponding to the at least one TA update period through the first configuration information from the UE, wherein the first uplink repeat transmission is scheduled to be transmitted after at least one of the common TA or UE-specific TA is updated.

14. A base station operating in a wireless communication system, the base station comprising:

at least one transceiver; and at least one processor connected to the at least one transceiver, wherein the at least one processor is configured to:

transmit first configuration information related to a non-terrestrial network (NTN) and second configuration information related to at least one timing advance (TA) update period to a user equipment (UE) through the at least one transceiver; transmit information for scheduling uplink repeat transmission to the UE through the at least one transceiver; and receive a first uplink repeat transmission based on at least one of a common TA or a UE-specific TA updated at a time corresponding to the at least one TA update period through the first configuration information from the UE through the at least one transceiver, wherein the first uplink repeat transmission is scheduled to be transmitted after at least one of the common TA or UE-specific TA is updated.

15. A processing device configured to control a user equipment (UE) to perform uplink transmission in a wireless communication system, the processing device comprising:

at least one processor; and at least one computer memory operatively coupled to the at least one processor and storing instructions for performing operations upon being executed by the at least one processor; the operations include:

receiving first configuration information related to a non-terrestrial network (NTN) and second configuration information related to at least one timing advance (TA) update period from a base station; updating at least one of a common TA or a UE-specific TA at a time corresponding to the at least one TA update period based on the first configuration information; and performing a first uplink repeat transmission scheduled to be transmitted after a time of updating at least one of the common TA or the UE-specific TA based on the updated at least one of the common TA or the UE-specific TA.

16. At least one non-transitory computer readable medium storing at least one instruction, based on the at least one instruction being executed by at least one processor, an apparatus operating in a wireless communication system controls to:

receiving first configuration information related to a non-terrestrial network (NTN) and second configuration information related to at least one timing advance (TA) update period from a base station; updating at least one of a common TA or a UE-specific TA at a time corresponding to the at least one TA update period based on the first configuration information; and performing a first uplink repeat transmission scheduled to be transmitted after a time of updating at least one of the common TA or the UE-specific TA based on the updated at least one of the common TA or the UE-specific TA.

# FIG.1

# FIG.2

# FIG.3

One Subframe

$14 \cdot 2^{\mu}$ OFDM Symbol

$k = N_{RB}^{\mu} N_{SC}^{RB} - 1$

Resource Block

Resource Element
- In a resource grid, $(k, \bar{l})$
- In a resource block, $(k, l)$

$N_{RB}^{\mu} N_{SC}^{RB} - 1$ Subcarrier

$N_{SC}^{RB}$ Subcarrier

$k = 0$

$l = 0$

$l = 14 \cdot 2^{\mu} - 1$

# FIG.4

# FIG.5

Resource grid

A carrier
(up to 3300 subcarriers, i.e., 275 RBs)

A BWP

1 RB=12 subcarrier

1 RE

1 subcarrier

1 Symbol

l=0 ·····

k=0

FIG.6

INITIAL CELL
SEARCH

SYSTEM
INFORMATION
RECEPTION

RANDOM ACCESS PROCEDURE

GENERAL DL/UL Tx/Rx

PSS/SSS&
[DLRS]&
PBCH

PDCCH/
PDSCH
(BCCH)

PRACH

PDCCH/
PDSCH

PUSCH

PDCCH/
PDSCH

PDCCH/
PDSCH

PUSCH/
PUCCH

S601

S602

S603

S604

S605

S606

S607

S608

· DL/UL ACK/NACK
· UE CQI/PMI RI REPORT
  USING PUSCH AND PUCCH

FIG.7

(a)                          (b)

# FIG.8

Field of view of the satellite(or UAS platform)

(a)

Field of view of the satellite(or UAS platform)

(b)

EP 4 518 459 A1

# FIG.9

- Common TA(Tcom) = 2*$D_0$/c
- UE specific differential TA for xth UE (T$_{UEx}$) = 2*($D_{1x}$−$D_0$)/c
- Full TA(Tfull) = Tcom + T$_{UEx}$

(a) Regenerative payload

- Common TA(Tcom) = 2*($D_{01}$+$D_{02}$)/c
- UE specific differential TA for xth UE (T$_{UEx}$) = 2*($D_{1x}$−$D_{01}$)/c
- Full TA(Tfull) = Tcom + T$_{UEx}$

(b)Transparent payload

# FIG.10

# FIG.11

| |
|---|
| RECEIVING FIRST CONFIGURATION INFORMATION RELATED TO A NTN AND SECOND CONFIGURATION INFORMATION RELATED TO AT LEAST ONE TA UPDATE PERIOD FROM THE BASE STATION — S1110 |
| UPDATING AT LEAST ONE OF THE COMMON TA OR THE UE-SPECIFIC TA AT A TIME CORRESPONDING TO AT LEAST ONE TA UPDATE PERIOD BASED ON THE FIRST CONFIGURATION INFORMATION — S1120 |
| PERFORMING A FIRST UPLINK REPETITIVE TRANSMISSION SCHEDULED TO BE TRANSMITTED AFTER THE TIME POINT AT WHICH AT LEAST ONE OF THE COMMON TA OR THE UE-SPECIFIC TA IS UPDATED, BASED ON AT LEAST ONE OF THE UPDATED COMMON TA OR THE UE-SPECIFIC TA — S1130 |

## FIG.12

TRANSMITTING FIRST CONFIGURATION INFORMATION RELATED TO NTN AND SECOND CONFIGURATION INFORMATION RELATED TO AT LEAST ONE TA UPDATE PERIOD TO THE UE — S1210

TRANSMITTING INFORMATION FOR SCHEDULING UPLINK REPETITIVE TRANSMISSION TO THE UE — S1220

RECEIVING A FIRST UPLINK REPETITION TRANSMISSION FROM A UE BASED ON AT LEAST ONE OF THE COMMON TA OR UE-SPECIFIC TA UPDATED AT A POINT IN TIME CORRESPONDING TO AT LEAST ONE TA UPDATE PERIOD THROUGH THE FIRST CONFIGURATION INFORMATION — S1230

## FIG.13

Base station                                    UE

S105
Configuration Information

Update UE-specific TA and/
/or Common TA  — S110

S115
Uplink repeat transmission

EP 4 518 459 A1

**FIG.14**

<table>
<tr><td colspan="2"><p align="center">**INTERNATIONAL SEARCH REPORT**</p></td><td>International application No.<br>**PCT/KR2023/004507**</td></tr>
</table>

| | |
|---|---|
| **A.** | **CLASSIFICATION OF SUBJECT MATTER** |

**H04W 56/00**(2009.01)i; **H04W 84/06**(2009.01)i; **H04B 7/185**(2006.01)i; **H04W 74/00**(2009.01)i; **H04L 5/00**(2006.01)i; **H04L 1/08**(2006.01)i

According to International Patent Classification (IPC) or to both national classification and IPC

| | |
|---|---|
| **B.** | **FIELDS SEARCHED** |

Minimum documentation searched (classification system followed by classification symbols)

H04W 56/00(2009.01); H04W 4/02(2009.01); H04W 74/08(2009.01); H04W 84/06(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: NTN, 타이밍 어드밴스 업데이트 주기(TA update period), 공통 TA(common TA), 단말-특정 TA(UE-specific TA), 상향링크 반복 전송(uplink repetition transmission)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| A | ERICSSON. [Pre117-e][NTN][101] RRC open issues. R2-2203154, 3GPP TSG RAN WG2 Meeting #117-e. Elbonia. 17 February 2022.<br>　　See pages 42-43. | 1-16 |
| A | CN 114007184 A (BEIJING SAMSUNG TELECOM R&D CENTER et al.) 01 February 2022 (2022-02-01)<br>　　See claims 1 and 3. | 1-16 |
| A | US 2021-0392597 A1 (HUAWEI TECHNOLOGIES CO., LTD.) 16 December 2021 (2021-12-16)<br>　　See paragraphs [0223]-[0263]; and figures 2-3. | 1-16 |
| A | US 2021-0360556 A1 (HUAWEI TECHNOLOGIES CO., LTD.) 18 November 2021 (2021-11-18)<br>　　See paragraphs [0092]-[0107]; and figure 6. | 1-16 |
| A | KR 10-2021-0126669 A (DATANG MOBILE COMMUNICATIONS EQUIPMENT CO., LTD.) 20 October 2021 (2021-10-20)<br>　　See paragraphs [0234]-[0257]; and figures 14-15. | 1-16 |

| ☐ Further documents are listed in the continuation of Box C. | ☑ See patent family annex. |
|---|---|

| | |
|---|---|
| *　　Special categories of cited documents:<br>"A"　document defining the general state of the art which is not considered to be of particular relevance<br>"D"　document cited by the applicant in the international application<br>"E"　earlier application or patent but published on or after the international filing date<br>"L"　document which may throw doubts on priority claim(s) or which is cited to establish the publication date of another citation or other special reason (as specified)<br>"O"　document referring to an oral disclosure, use, exhibition or other means<br>"P"　document published prior to the international filing date but later than the priority date claimed | "T"　later document published after the international filing date or priority date and not in conflict with the application but cited to understand the principle or theory underlying the invention<br>"X"　document of particular relevance; the claimed invention cannot be considered novel or cannot be considered to involve an inventive step when the document is taken alone<br>"Y"　document of particular relevance; the claimed invention cannot be considered to involve an inventive step when the document is combined with one or more other such documents, such combination being obvious to a person skilled in the art<br>"&"　document member of the same patent family |

| Date of the actual completion of the international search | Date of mailing of the international search report |
|---|---|
| **30 June 2023** | **03 July 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| INTERNATIONAL SEARCH REPORT<br>Information on patent family members | | | | | International application No.<br>**PCT/KR2023/004507** | | |
|---|---|---|---|---|---|---|---|
| Patent document<br>cited in search report | | | Publication date<br>(day/month/year) | Patent family member(s) | | | Publication date<br>(day/month/year) |
| CN | 114007184 | A | 01 February 2022 | EP | 4179801 | A1 | 17 May 2023 |
| | | | | WO | 2022-011926 | A1 | 20 January 2022 |
| | | | | WO | 2022-015004 | A1 | 20 January 2022 |
| | | | | WO | 2022-078005 | A1 | 21 April 2022 |
| | | | | WO | 2022-078288 | A1 | 21 April 2022 |
| | | | | WO | 2022-078371 | A1 | 21 April 2022 |
| US | 2021-0392597 | A1 | 16 December 2021 | CN | 111615186 | A | 01 September 2020 |
| | | | | CN | 111615186 | B | 17 May 2022 |
| | | | | CN | 114900882 | A | 12 August 2022 |
| | | | | EP | 3920608 | A1 | 08 December 2021 |
| | | | | WO | 2020-169048 | A1 | 27 August 2020 |
| US | 2021-0360556 | A1 | 18 November 2021 | CN | 111526576 | A | 11 August 2020 |
| | | | | CN | 111526576 | B | 26 October 2021 |
| | | | | EP | 3905798 | A1 | 03 November 2021 |
| | | | | WO | 2020-156015 | A1 | 06 August 2020 |
| KR | 10-2021-0126669 | A | 20 October 2021 | CN | 111565472 | A | 21 August 2020 |
| | | | | CN | 111565472 | B | 20 May 2022 |
| | | | | CN | 114928880 | A | 19 August 2022 |
| | | | | EP | 3927097 | A1 | 22 December 2021 |
| | | | | JP | 2022-520627 | A | 31 March 2022 |
| | | | | JP | 7286781 | B2 | 05 June 2023 |
| | | | | US | 2022-0150858 | A1 | 12 May 2022 |
| | | | | WO | 2020-164362 | A1 | 20 August 2020 |

Form PCT/ISA/210 (patent family annex) (July 2022)